# EUROPÄISCHE PATENTSCHRIFT

(11) **EP 1 559 331 B1**
(45) Veröffentlichungstag und Bekanntmachung des Hinweises auf die Patenterteilung: **14.05.2008**
(21) Anmeldenummer: 04400058.6
(22) Anmeldetag: 17.11.2004
(51) Int. Cl.: A23L 1/31, A47J 27/10, F24C 15/32, F25D 31/00, A47J 27/18

(54) **Verfahren und Vorrichtung zur schonenden Speisezubereitung**
Method and device for careful food preparation
Procédé et dispositif pour une préparation de repas modérée

(30) Priorität: 28.01.2004 DE 102004005148
(43) Veröffentlichungstag der Anmeldung: 03.08.2005
(73) Patentinhaber: HDB Dienstleistungs-und Beratungsgesellschaft mbH, 04179 Leipzig (DE)
(72) Erfinder: Hänchen, Wilfried, 09306 Rochlitz OT Nosswitz (DE)
(74) Vertreter: Voigt, Wolf-Rüdiger

(56) Entgegenhaltungen:
- EP-A1- 0 737 423
- DE-A1- 10 003 128
- DE-A1- 19 614 309

## Beschreibung

Die Erfindung betrifft ein Verfahren zur schonenden Zubereitung von Fleisch sowie vorzugsweise zum Braten, Niedertemperaturgaren, Kochen und Dämpfen, wie z. B. zum Kochen von Kartoffeln und Dämpfen von Gemüse. Das Gesamtkonzept geht davon aus, dass die Speisen stets bei zweckentsprechenden niedrigen Temperaturen, d.h. schonend zubereitet werden und andererseits nur soweit erhitzt werden, dass gesundheitliche Schäden ausgeschlossen sind. Die schonende Speisezubereitung soll genutzt werden, um zu verhindern, dass viele ernährungsphysiologisch wichtige Inhaltsstoffe, wie Vitamine und Enzyme nicht vernichtet werden. Weiterhin soll durch schonende Speiszubereitung der naturelle Geschmack erhalten sowie eine hohe Saftigkeit und ein zarter (mürber) Braten erreicht werden.

Für die Speisezubereitung gibt es recht anspruchsvolle technische Lösungen, die beschrieben und durch entsprechende Gerätetechnik realisiert sind. Man muss jedoch feststellen, unterzieht man die Geräte einer eingehenden Betrachtung, dass diese Geräte häufig eine schnelle Speisezubereitung bewirken und zu wenig eine schonende Speisezubereitung ermöglichen. Nach dem Stand der Technik lässt sich hier nur durch manuelle Einflussnahme sowie durch Erfahrung und Einsicht eine Verbesserung bei der Speisezubereitung erreichen. Die vorhandene Gerätetechnik ist zu wenig auf eine schonende Speisezubereitung ausgerichtet.

Es ist gemäß EP 0 737 423 B1 ein Verfahren und eine Einrichtung zur automatischen Behandlung von Kühlgut, Gargut und Backwaren bekannt. Bei der Speisezubereitung, z. B. bei einem vorbereiteten Braten, wird davon ausgegangen, dass bei einem bestimmten Teilbereich der Einrichtung die Wärmezufuhr z. B. bei einem Schweinebraten mit 180-220 °C vorgegeben wird. Ein elektronischer Kerntemperaturmesser im Fleisch gibt eine Kerntemperatur von 30-99°C an. Die gemäß EP 0 737 423 B1 beschriebene Erfindung bezieht sich aber nicht auf eine ausdrücklich schonende Behandlung der Speisen bei der Zubereitung. Wenn auch diesem Erfordernis im gewissen Maße mit der vorher genannten Lösung entsprochen wird, so handelt es sich jedoch vordergründig um die automatische Behandlung von Kühlgut, Gargut und Backwaren in einem Gerät.

Es sei noch kurz auf DD-WP 26 25 31 verwiesen, womit es möglich wird, die Luftfeuchte im Garraum durch ein Wasserbad zu erhöhen.Es wird bei Erfordernis das Gargut nicht nur mit Wasser, sondern mit der beim Braten abtropfenden Flüssigkeit besprüht (Glasieren). Auch diese an sich sinnvolle Lösung stellt nur einen Teilschritt einer allerdings schmackhaften Speisezubereitung dar und ist nicht auf eine komplexe schonende Speisezubereitung ausgerichtet.

Es ist daher die Aufgabe der Erfindung, ein Verfahren zur Speisezubereitung vorzuschlagen, welches unter Verwendung einer Einrichtung eine äußerst schonende Zubereitung von Fleisch, Kartoffeln, Gemüse und oder anderen Speisekomponenten im Komplex, d.h. in einem Garraum ermöglicht. Weiterhin soll das Gargut im Garraum auch einge Tage gekühlt aufbewahrt werden können, um es dann vor dem Verzehr zu erwärmen. Im Gegensatz zu den allgemein üblichen Verfahren der Speisezubereitung soll erfindungsgemäß erreicht werden:
- keine Vernichtung bzw. möglichst geringe Herabsetzung der Inhaltsstoffe der Lebensmittel wie Vitamine u.a.
- keine Vernichtung von nahrungseigenen Enzymen
- möglichst Erhaltung des natürlichen Geschmacks
- geringe Masseverluste beim Zubereiten von Fleisch
- durch mäßige Hitzeeinwirkung keine Veränderung der Strukturen der Aminosäuren, so dass sie für die Stoffwechselvorgänge im Körper erhalten bleiben
- weitgehende Verhinderung der Auslaugung von Mineralien
- Energieeinsparung
- Verhindern des Anbrennens und somit einfache Reinigung verwendeter Gefäße
- kein ständige manuelle Garprüfung, da alle Prozesse im Komplex elektronisch gestelert werden. Dadurch entfällt das ständige manuelle prüfen des Fleisches (Zeitverschwindung) und zugleich wird durch das ständige Einstechen in das Fleisch eine Austrocknung desselben verhindert.
- Kühlung des Gargutes im Garraum bei mehrtägiger Aufbewahrung
- Komplette Menügarung durch elektronische Steuerung im Garraum

Erfindungsgemäß wird die Aufgabe gelöst, wobei auf den Patentanspruch 1 verwiesen wird. Die weitere Ausgestaltung der Erfindung ergibt sich aus den Patentansprüchen 2 bis 8.
Die Erfindung soll nachfolgend näher erläutert werden.

Zur Durchführung des Verfahrens wird ein Elektroherd mit Kerntemperaturanzeige verwendet, der durch gerätetechnische Veränderungen von den bekannten Elektroherden abweicht.

Der Heiz- und Garraum des Herds ist am oder nahe am Boden mit einer Elektroheizung versehen. Die Heizdrähte sind in Abweichung von üblichen Ausführungen mäanderförmig verlegt. Das bedeutet: In der Draufsicht betrachtet, werden zwei Heizschleifen von der vorderen Seite des Herdbodens bis nahe der hinteren Seite des Herdbodens geführt. Auf diesen Heizschleifen werden unter Verwendung eines Einschubbleches bei der Speisezubereitung Schalen platziert, die jeweils im Grundriss annähernd der von jeder Heizschleife zu erwärmenden Fläche entsprechen. Somit kann eine Schale für das Kochen von Kartoffeln verwendet werden und eine weitere Schale mit Dampfeinsatz für das Dünsten von Gemüse. Die Heizspiralen werden zeitlich unterschiedlich gesteuert und haben eine unterschiedliche elektrische Leistung entsprechend dem jeweiligen Energiebedarf für das Dünsten von Ge müse und dem Kochen von Kartoffeln.

Zweckmäßigerweise sollten die Schalen für Gemüse und Kartoffen abgedeckt sein, damit sich die arteigenen Gerüche der Speisen bei der Zubereitung nicht im Heiz- und Garraum zu sehr verbreiten und die die Garprozesse wesentlich beschleunigt.
Im Heiz- und Garraum sind üblicherweise unterschiedliche Einschübe für Gitter bzw. Einschubbleche oder Roste für das Aufstellen der Behälter bzw. der Pfannen vorgesehen.
Eine Besonderheit ist die Trennung des Garraumes in der Mitte waagerecht durch eine nur schwer hitzedurchlässige Platte, die ähnlich wie ein Einschubblech zur Trennung in den Herd geschoben werden kann. Diese Platte besteht aus zwei dünnen Edelstahlhälften, welche mit einer Spezialfüllung (gegebenenfalls mit einer speziellen Flüssigkeit) gefüllt sind. Damit erfolgt eine Trennung der Wärme zwischen der oberen und unteren Kammer und zugleich eine längere Warmhaltung der Speisen in der jeweiligen Kammer.

Eine Wasserschale, die sogenannte Bainmarie, wird mit 0,5 bis 21 Wasser gefüllt.
Es erfolgt eine schonende Zubereitung von Fleisch in der Pfanne, welches mit der Pfanne in der Wasserschale in der oberen Kammer steht sowie von Gemüse, welches in einem geschlossenem Behälter mit Dampfeinsatz in der unteren Kammer platziert. Weiterhin erfolgt das Kochen von Kartoffeln, welche in Wasser in einem länglichen Behälter ehenfalls in der unteren Kammer stehen.

Der gewünschte Braten wird mit Gewürzen eingerieben und in die Bratschale eingelegt.
Dazu gibt man Röstgemüse und Zwiebeln und streicht alles mit Fettigkeit ein.
Danach wird das Fleisch auf beiden Seiten angebraten, d. h. das Fleisch wird in heißes Fett eingelegt und kurz auf beiden Seiten so angebraten, dass sich die Poren schließen und zur gleichen Zeit gebräunt wird. Danach wird das angebratene Fleisch von der Herdplatte genommen und in die vorbeschriebene Wasserschale, die mit kaltem Wasser gefüllt ist, eingesetzt.
Damit wird ein schnelles Durchbraten bzw. Nachziehen des angebratenen Fleisches verhindert und zur gleichen Zeit dient das Wasser in der Wasserschale während des Garpro zesses zur Erhöhung der Luftfeuchte im Garraum, welches eine saftige Garung bewirkt und ein Austrocknen des Fleisches weitgehend verhindert. Ein Verbrennen des Fleisches, insbesondere an der unteren Hälfte, wird ebenfalls ausgeschlossen.

Nachdem sich das Fleisch im Garraum befindet, wird möglichst in der Mitte des unteren Drittels die Spitze des Garprüfers in das Fleisch eingestochen. Die gewünschte Kerntemperatur wird entsprechend eingestellt.
Da jedoch eine Kombination der Garung mit den Sättigungs- und Wirkstoffbeilagen erreicht werden soll, wird die Kerntemperatur jedoch 10 % niedriger als die zu erreichende notwendige Temperatur eingestellt, weil im ersten Drittel des Garprozesses nur die Oberhitze bei ca. 150 °C eingestellt wird. Damit erreicht man im Durchschnitt eine Brattemperatur bei ca. 90 - 120 °C und in der unteren Hälfte des Garraumes, wo sich das Gemüse und die Kartoffeln befinden, erfolgt dabei kaum eine Erwärmung.
Wenn 90 % der Kerntemperatur erreicht sind, schaltet die Oberhitze ab und die Unterhitze schaltet sich in gleicher Höhe zu.
Nun erfolgt das Dämpfen des Gemüses, welches in einer speziellen Schale mit Dampfeinsatz und Deckel in der unteren Hälfte steht und die Garung der Kartoffeln, die ebenfalls über Dämpfen oder Garen (Kochen) erfolgt. Jetzt erfolgt eine Garung in der unteren Hälfte in einem Zeitraum von 50 Minuten. Danach wird der Ofen über eine integrierte Zeitschaltuhr komplett ausgeschaltet und es erfolgt ein 10-minütiges Nachgaren.
In der oberen Hälfte erfolgt in der gesamten Zeit ein weiteres Reifen des Fleisches, und in der unteren Hälfte werden in dieser Zeit Kartoffeln upd Gemüse gekocht bzw. gedämpft.

Beim Einsetzen der Bratschale in die Wasserschale des Herdes ist der Herd noch nicht erwärmt.
Die Schalen mit Dampfeinsatz sind entsprechend mit Wasser gefüllt. Die Behälter mit Kartoffeln bzw. Gemüse werden auf die mäanderförmigen Heizspiralen, d.h. auf die Abdeckbleche über die Heizspiralen gesetzt.
Die Oberhitze wird bei 150°C eingeschaltet.

Der Braten wird sich beim Einbringen in den Herd erst einmal abkühlen.
Dieser Vorgang ist bewusst angestrebt, um ein schnelles Durchgaren zu verhindern, da das Fleisch nicht bei hoher Hitze schnell durchgegart werden soll. Es soll durch diesen Prozess eine langsame Fleischreifung erzielt werden.
Durch die Erhitzung nur mit Oberhitze erfolgt eine Garung bei ca. 95 bis 11 5°C.
Dabei wird das Wasser in der Wasserschale erhitzt und umgibt zusätzlich das Fleisch mit einer hohen Luftfeuchtigkeit, wodurch ein Masseverlust von nur 5 bis ca. 12 % erfolgt im Gegensatz zu herkömmlichen Zubereitungen bei 30-40 % Masseverlust.

In der Herdplatte ist eine kleine Öffnung vorgesehen, über die mit einem Trichter bei ca. 50 % der Bratzeit der Braten mit Wasser bzw. Brühe aufgefüllt werden kann. Die Öffnung ist also in jedem Fall so angeordnet, dass das zuzugebende Wasser in die Bratschale gelangt. Ansonsten ist die Öffnung mit einem Deckel eben verschlossen.

Es hat sich gezeigt, dass durch die hohe Luftfeuchtigkeit und den niedrigen Temperaturen das Fleisch besonders mürbe, saftig und zart wird.
Die Zeit der Garung bei 95 - 115°C kann entsprechend durch den elektronisch gesteuerten Prozessor eingestellt werden. Nachdem die gewünschte Kerntemperatur, d. h. 90 % der Endgarung erreicht sind, schaltet die Oberhitze ab und die Unterhitze schaltet ein.
Jetzt wird das Gemüse gedämpft, die Kartoffeln gekocht und nach vorprogrammierter Zeit schaltet die Unterhitze ab, so dass im gesamten Garraum keine Hitzezuführung mehr erfolgt.
Danach erfolgt ein zehnminütiger Ruheprozess. Dadurch kann sich der reichlich im Fleisch vorhandene Fleischsaft gleichmäßig gut verteilen.

Will man das Fleisch, z. B. Geflügel, besonders kross haben, wird nach dem Gesamtprozess der Grill max. sieben Minuten manuell noch zugeschaltet. Vor Einschalten des Grills kann das Fleisch mit Bier bzw. Salz- oder Zuckerwasser eingestrichen werden. Damit erhält es eine besonders schöne Bräune.

Durch die schonende Speisenzubereitung, wie hier dargelegt, wird die gestellte Aufgabe umfassend erfüllt.

Durch die komplexe Garung der Prozesse Kochen, Dünsten, Braten und Gratinieren (Grillen) in einem Garraum erfolgt eine entsprechende Energieeinsparung. Alle Behälter bzw. Schalen lassen sich besonders schnell und gut reinigen. Da diese nicht einer starken Hitze ausgesetzt sind, wird ein Anbrennen jederzeit verhindert.

Die Edelstahlschalen mit Dampfeinsatz (Gemüse ) können nach dem Garprozess auf entsprechenden Untersetzern direkt auf den Mittagstisch gestellt werden. Sie geben
a) einen guten Anblick und
b) hält sich z. B. das Gemüse durch den unterhalb des Dampfeinsatzes befindlichen heißen Gemüsefond sehr lange warm.
Soweit der Garpozess abgeschlossen ist, und die Speisen nicht sofort zum Verzehr entnommen werden, erfolgt noch ein Warmhalten der Speisen über 2 Stunden bei 85°C bis der Herd geöffnet wird.

Eine Besonderheit der erfindungsgemäßen Einrichtung ist die gerätetechnische Ergänzung durch einen Kühlteil. Werden z. B. nach 2 Stunden die Speisen nicht entnommen, schaltet der Herd jetzt für 1 Stunde die Wärmezufuhr ab. Wenn der Herd weiterhin nicht geöffnet wird, setzt danach die Kühlung im Garraum ein. Die Speisen können jetzt bis zu einer Woche im gekühlten Garraum des Herds verbleiben.
Die Figuren entsprechend dem folgenden Ausführungsbeispiel zeigen in Prinzipdarstellung:
- Figur 1: Vorderansicht der Einrichtung
- Figur 2: Ansicht B; Schnitt B-B gemäß Figur 1 bzw. Figur 3(teilweise)
- Figur 3: Ansicht A; Draufsicht
- Figur 4: Prinzipieller Aufbau der Einrichtung mit Kühlsystem

Die verwendeten Bezugszeichen bedeuten:
[1] Gehäuse des Elektroherds
[2] Elektronisch gesteuerte Zeitschaltuhr in Verbindung mit Garprüfer
[3] Ceranfeld
[4] Schubfächer zur Ablage von Küchenutensilien
[5] Wärmedämmender Einschub aus Edelstahl
[6] Wasserschale (Bainmarie)
[7] Bratschale
[8] Einschubblech
[9] Schalen zum Kochen und Dünsten
[10] Dampfeinsatz
[11] Heizspiralen im Garraum
[12] manuelle Zeitschaltuhr
[13] Temperatureinstellung
[14] Unter-/Ober-Grilleinstellung
[15] Einsteckbuchse für Garfpüfnadel
[16] Garprüfnadel
[17] Eingießhülse für Bratenaufguß mit Deckel

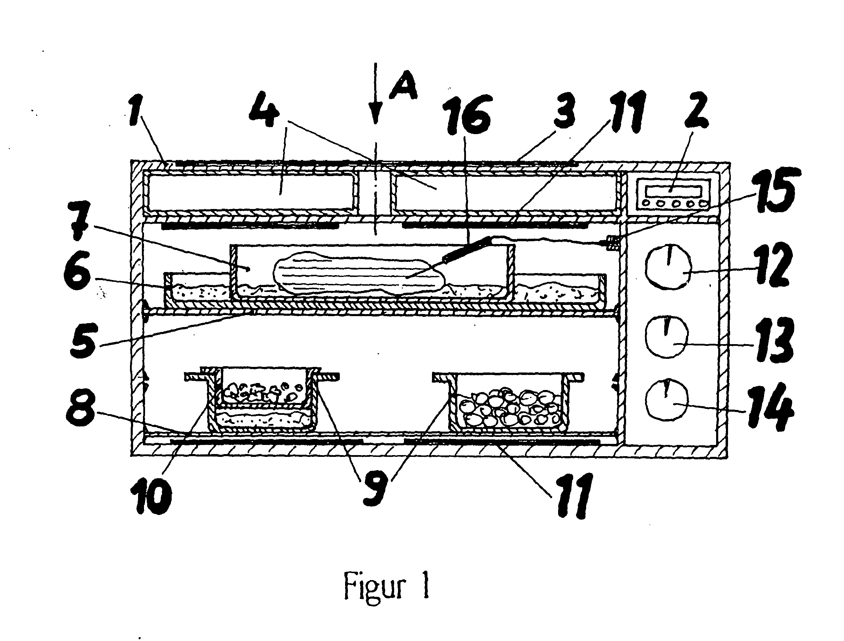

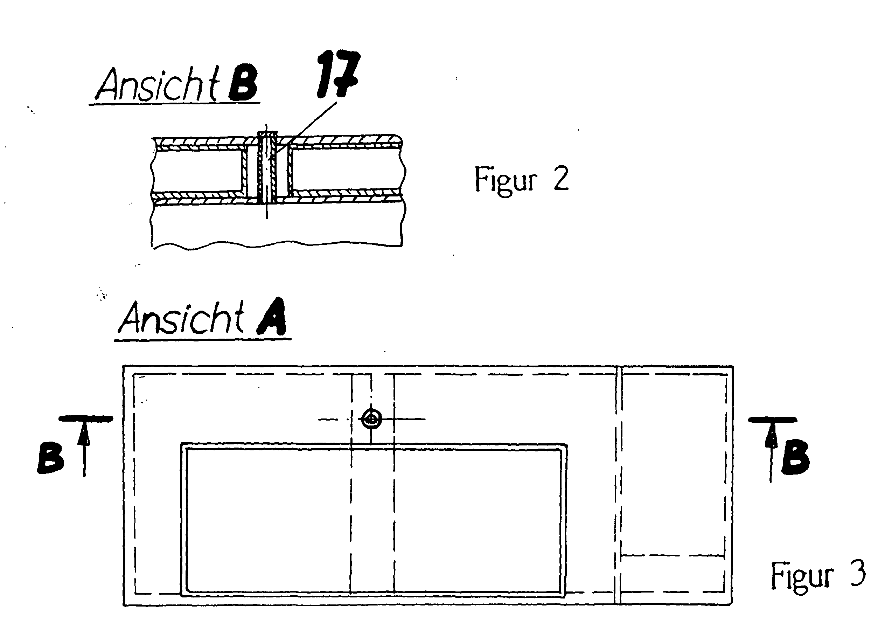

Das Verfahren zur schonenden Speisenzubereitung wurde bereits eingehend erläutert und soll unter Hinweis auf die Figuren 1 bis 4 kurz dargelegt werden.

Auf dem Elektroherd 1 wird unter Verwendung der Heizfläche , dem Ceranfeld 3, der gewünschte, eingeölte Braten mit Röstgemüse und Zwiebeln auf beiden Seiten angebraten. Die Poren des Fleisches werden geschlossen, der Austritt von Fleischsaft wird verhindert. Nach dem Anbraten wird der Braten mit Fleischbrühe bzw. Weißwein leicht aufgefüllt.

Danach wird die Bratschale 7 in die Wasserschale (Bainmarie) 6 gestellt, in der sich kaltes Wasser befindet.

Die Wasserschale 6 wird durch den wärmedämmenden Einschub 5 gehalten. Jetzt wird die Spitze des Garprüfers 16 in das untere Drittel des Fleisches eingesteckt. Danach erfolgt die Temperatureinstellung nur für Oberhitze auf 150°C. Danach erfolgt die Einstellung der Unterhitze und danach die Einstellung der Kerntemperatur.
Jetzt erfolgt in der oberen Hälfte des Herds die Garung des Fleisches bis zu 90 % der eingestellten Kerntemperatur.
Während des Garprozesses entsteht in der oberen Hälfte des Garraumes eine hohe Luftfeuchtigkeit durch die Verdunstung des Wassers aus der Schale 6 und zugleich des Fond aus der Schale 7.
Die Garung erfolgt im Wesentlichen bei 95 - 110°C, einer sogenannten Langzeitgarung. Dadurch wird das Fleisch besonders mürbe und bleibt saftig.
Nach dem Erreichen von 90°C der Gesamtkemtemperatur des Fleisches wird die Oberhitze abgeschaltet und die Unterhitze bei 150°C zugeschaltet.

Unter den Schalen 9 befinden sich mäanderförmige Heizspiralen, die derartig ausgeführt sind, dass durch unmittelbare Kontaktwärmeübertragung die Wärmeverluste beim Kochen bzw. Dünsten gering gehalten werden. Die Heizspiralen haben eine unterschiedliche Leistung und können zeitlich voneinander unabhängig geschaltet werden. Dadurch kann bei der schonenden Speisezubereitung durch Dünsten bzw. Kochen den unterschiedlichen Anforerungen (Zeit, Temperatur) entsprochen werden.

Es ist abschließend festzustellen, dass das Herrichten einer Mahlzeit, bestehend aus einem Braten, Kartoffeln und Gemüse, gleichzeitig in einer Einrichtung, nämlich in einem modifizierten Elektroherd, mit allen vorgenannten Vorteilen erfolgt.

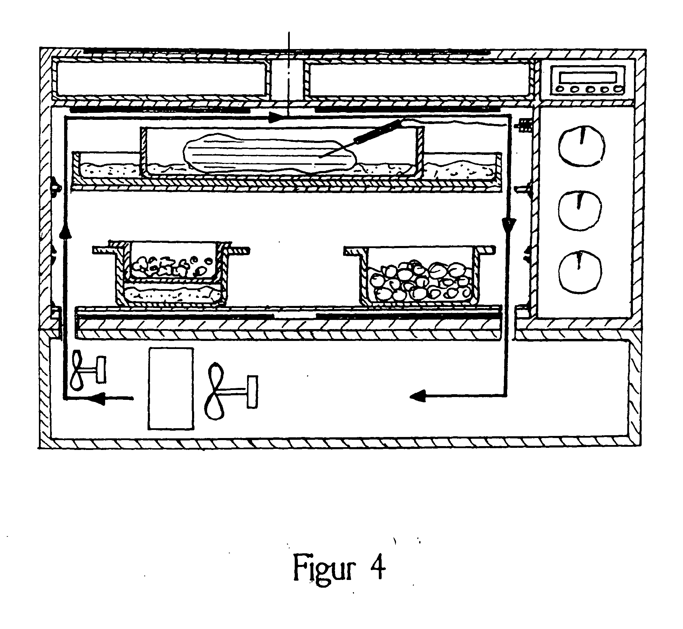

Die Figur 4 zeigt den prinzipiellen Aufbau der erfindungsgemäßen Einrichtung mit Kühlsystem. Im unteren Teil des Herds ist ein Kühlaggregat vorhanden. Der Herd weist Kanäle auf, durch welche die gekühlte Luft zugeführt und die während des Umlaufs erwärmte Luft zum Kühlaggregat zurückgeführt wird.

## Patentansprüche

1. Verfahren zur schonenden Speisenzubereitung von Fleisch, Kartoffeln und Gemüse unter Verwendung eines Elektroherds mit einer elektronischen Steuerung mit Anzeigedisplay und integriertem Kerntemperaturmessgerät für das Fleisch, welches als Braten zubereitet und in einem ersten Verfahrensschritt auf dem Elektroherd (1) mit Ceranfeld (3) in einer Bratschale (7) angebraten wird, **dadurch gekennzeichnet, dass** nach dem Anbraten die Bratschale (7) in einer oberen Kammer des Garraumes des Elektroherds platziert wird, wobei die Bratschale (7) in eine großflächige Schale (Brainmarie) (6) in kaltes Wasser gesetzt wird, die Spitze eines Garprüfers in das Fleisch eingestochen und die gewünschte Kerntemperatur eingestellt wird, im ersten Drittel des Garprozesses nur Oberhitze bei 150° C eingestellt wird, die Kerntemperatur auf 90 % der eingestellten Kerntemperatur angehoben wird, das Fleisch während des Bratens mit Wasser oder Brühe über eine Eingießhülse (17) aufgefüllt werden kann, danach die Oberhitze abgeschaltet und die Unterhitze bei gleicher Temperaturhöhe zugeschaltet wird, nach Einschaltung der Unterhitze das Kochen, Dämpfen, bzw. Dünsten von Kartoffeln und Gemüse in gesonderten Schalen (9) mit Dampfeinsatz (10) in einer unteren Kammer des Garraumes erfolgt, wonach der Elektroherd ausgeschaltet wird und ein Nachgaren erfolgt und die obere und untere Kammer des Garraumes durch einen wärmedämmenden Einschub (5) getrennt ist, der derart ausgeführt ist, dass keine Hitze aus der oberen Kammer in die untere Kammer gelangt.

2. Verfahren nach Anspruch 1, **dadurch gekennzeichnet, dass** nach dem Einsetzen des Bratens mit der Bratschale (7) in die großflächige Schale (6) durch kaltes Wasser die Temperatur des Fleisches abgesenkt wird und damit ein langsames sanftes Garen erfolgt.

3. Verfahren nach Anspruch 1, **dadurch gekennzeichnet, dass** das Kochen, Dämpfen bzw. Dünsten von Kartoffeln und Gemüse in einem Zeitraum von 50 Minuten und ein Nachgaren im Zeitraum von 10 Minuten erfolgt.

4. Verfahren zur schonenden Speisenzubereitung nach Anspruch 1, **dadurch gekennzeichnet, dass** die Einrichtung ein Geräteteil aufweist, welches bei mehrtägiger Aufbewahrung der zubereiteten Speisen im Garraum diese bis auf 4° bis 5° C kühlt.

5. Einrichtung zur schonenden Speisenzubereitung von Fleisch, Kartoffeln und Gemüse unter Verwendung eines Elektroherds mit einer elektronischen Steuerung mit Anzeigedisplay und integriertem Kerntemperaturmessgerät für das Fleisch, nach dem Verfahren von Anspruch 1, **dadurch gekennzeichnet, dass** im Garraum der Einschub (5) aus einem doppelseitigen Edelstahlblech besteht, welches zwischen den Blechen eine Isolierschicht aufweist, die ggf. eine flüssige Isolierschicht darstellt und den Garraum in zwei Kammern trennt, ohne dass die Hitze aus dem oberen Garraum (Kammer) in die untere Kammer gelangt, über dem Einschub (5) eine großflächige Schale (6) angebracht ist, die so bemessen ist, dass sie noch nach dem Platzieren der Bratschale (7) mit dem Braten mit ca. 0,5 bis 2,01 Wasser gefüllt werden kann, der obere Garraum ein integriertes Kerntemperaturmessgerät umfasst, die untere Kammer ein Einschubblech (8) zum Platzieren von Schalen (9) zum Kochen von Kartoffeln und Gemüse aufweist und Heizspiralen (11) nahe dem Boden des Garraumes mäanderförmig verlegt sind und dass sich in der Herdplatte eine kleine Öffnung (Eingießhülse (17)) befindet, die so angeordnet ist, so dass der Braten während des Bratens mit Wasser oder Brühe aufgefüllt werden kann.

6. Einrichtung zur schonenden Speisenzubereitung nach dem Verfahren von Anspruch 1 oder nach Anspruch 5, **dadurch gekennzeichnet, dass** die Heizspiralen nahe dem Boden des Garraumes in der Draufsicht so gestaltet sind, dass die mäanderformig geführten Heizspiralen jeweils den Wärmekontakt mit den Schalen (9) haben und die Heizspiralen eine unterschiedliche, der jeweiligen Speisenzubereitung angepasste Leistung haben.

## Claims

1. Process for gentle cooking of meat, potatoes and vegetables, using an electric oven with an electronic control with display indication and an integrated core temperature measuring device for the meat to be roasted, which is seared in a roasting pan (7) on the electric oven (1) on a Ceran hob (3) in an initial cooking step, **characterised in that** after the meat has been seared, the roasting pan (7) is placed in an upper cooking chamber of the electric oven, whereby the roasting pan (7) is placed into a large dish (bain-marie) (6) in cold water, the tip of a cooking thermometer is inserted into the meat and the desired core temperature is set, in the first third of the cooking process the heating spirals for the upper chamber only are set at 150°C, the core temperature is raised to 90% of the core temperature set, water or stock is added to the meat via a pouring sleeve (17) during roasting, thereafter the heating spirals for the upper chamber are switched off and the heating spirals for the lower chamber are switched on at the same temperature, after the heating spirals for the lower chamber have been switched on, the potatoes and vegetables are cooked, steamed or braised in separate bowls (9) by a steam insert (10) in a lower cooking chamber, whereupon the electric oven is switched off and the finishing of the cooking takes place and the upper and lower cooking chambers are separated by a heat-insulating insert (5), which is constructed in such a way that no heat can escape from the upper into the lower chamber.

2. Process in accordance with claim 1, **characterised in that** after the roast in the roasting pan (7) has been put into the large dish (6), the temperature of the meat is reduced by cold water, thereby enabling the meat to be cooked slowly and gently.

3. Process in accordance with claim 1, **characterised in that** the potatoes and vegetables are cooked, steamed or braised over a period of 50 minutes and the finishing of the cooking takes place over a period of 10 minutes.

4. Process for gentle cooking in accordance with claim 1, **characterised in that** the device has a component that cools the cooked meat down to °4 to °5 if it is to be stored for several days in the cooking chamber.

5. Device for gentle cooking of meat, potatoes and vegetables using an electric oven with an electronic control with display indication and an integrated core temperature measuring device for the meat, in accordance with the process in claim 1, **characterised in that** the insert (5) in the cooking chamber consists of a double-sided stainless steel sheet with an insulating layer between the sheets, which, where necessary, provides a liquid insulating layer and divides the cooking chamber into two chambers, with heat being prevented from escaping from the upper cooking chamber (chamber) into the lower chamber, over the insert (5) a large dish (6) is positioned of such dimensions that it can be filled with approximately 0.5 to 2.0 litres of water after the roasting pan (7) containing the roast has been placed inside it, the upper cooking chamber contains an integrated core temperature measuring device, the lower chamber has an insert plate for placing bowls (9) on for cooking potatoes and vegetables and heating spirals (11) are disposed in a meandering pattern near the base of the cooking chamber and a small opening (pouring sleeve (17)) is located in the hotplate, positioned in such a way that water or stock can be added to the roast during roasting.

6. Device for gentle cooking in accordance with the process in claim 1 or claim 5, **characterised in that** the heating spirals near the base of the cooking chamber in the top view are so arranged that said heating spirals disposed in a meandering pattern have thermal contact each time with the bowls (9) and said heating spirals have a different output adjustable to the meat being cooked at any particular time.

## Revendications

1. Procédé pour la préparation avec soin de mets de viandes, de pommes de terre et de légumes à l'aide d'une cuisinière électrique dotée d'une commande électronique avec un affichage et un thermomètre à viande intégré pour la viande devant être rôtie, à faire revenir dans une première phase du procédé dans une rôtissoire (7) sur une cuisinière électrique (1) avec une plaque en vitrocéramique (3), **caractérisé en ce qu'**après avoir fait revenir le rôti la rôtissoire (7) est à placer dans une chambre supérieure du four de la cuisinière électrique, la rôtissoire (7) devant être mise dans un bac de grande surface (bain-marie) (6) dans l'eau froide, la pointe d'un contrôleur de cuisson étant inséré dans la viande et la température souhaitée au centre étant réglée, dans le premier tiers du processus de cuisson seule la résistance de voûte est réglée à 150 °C, la température au centre de la viande est augmentée à 90 % de celle qui y est réglée, la viande pendant la cuisson peut être arrosée avec de l'eau ou du bouillon au moyen d'une buse d'arrosage (17), ensuite la résistance de voûte est à mettre à l'arrêt et la résistance de sole en service sous la même température, après la mise en service de la résistance de sole a lieu la cuisson à la vapeur ou à l'étuvée des pommes de terre et des légumes dans des pots spéciaux (9) avec insert de vaporisation (10) dans une des chambres inférieures du four, après quoi la cuisinière électrique est mise à l'arrêt et une post-cuisson se fait, la chambre supérieure et la chambre inférieure étant séparées par un tiroir thermo-isolant (5) qui est conçu de manière à ce que la chaleur de la chambre supérieure ne parvienne pas dans la chambre inférieure.

2. Procédé selon la revendication 1, **caractérisé en ce qu'**après la disposition du rôti avec la rôtissoire (7) dans le bac de grande surface (6) la température de la viande est diminuée permettant ainsi une cuisson douce et lente.

3. Procédé selon la revendication 1, **caractérisé en ce que** la cuisson, cuisson à la vapeur ou à l'étuvée des pommes de terre et de légumes, se fait durant 50 minutes et une post-cuisson durant 10 minutes.

4. Procédé pour la cuisson avec soin de mets selon la revendication 1, **caractérisé en ce que** le dispositif présente un appareil complémentaire, lequel en cas de conservation sur plusieurs jours des mets préparés refroidit les mets préparés entre 4 et 5 °C dans le four.

5. Dispositif pour la cuisson avec soin de mets de viande, de pommes de terre et de légumes à l'aide d'une cuisinière électrique dotée d'une commande électronique avec affichage et thermomètre à viande intégré inséré au centre de la viande selon le procédé d'après la revendication 1, **caractérisé en ce que** dans le four, le tiroir (5) est constitué d'une tôle bilatérale en acier spécial, lequel présente une couche thermo-isolante entre les tôles constituée le cas échéant d'une couche isolante liquide et séparant le four en deux chambres, sans que la chaleur de l'espace supérieur de cuisson (chambre) parvienne dans la chambre inférieure, qu'au-dessus du tiroir (5) un bac grande surface (6) prend place qui est dimensionné de sorte qu'après la mise place de la rôtissoire (7) avec le rôti on puisse y remplir env. 0,5 à 2,0 I d'eau, que l'espace supérieur de cuisson contient un thermomètre intégré inséré au centre de la viande, la chambre inférieure un tiroir en tôle (8) pour la mise en place de pots (9) pour la cuisson des pommes de terre et de légumes et de résistances (11) proches de la sole du four disposées en forme de méandres et qu'il y a dans la plaque de la cuisinière un petit orifice (buse d'arrosage) (17) disposé de telle manière que le rôti pendant la cuisson puisse être arrosé d'eau ou de bouillon.

6. Dispositif pour la cuisson avec soin de mets selon le procédé d'après la revendication 1 ou d'après la revendication 5, **caractérisé en ce que** les résistances proches de la sole du four dans la vue du dessus sont conformées de manière à ce que les résistances disposées en forme de méandres ont chacune un contact chauffant avec les pots (9) et que les résistances ont chacune une puissance différente adaptée à la préparation des mets.
